# FASCICULE DE BREVET EUROPEEN

(11) **EP 4 347 384 B1**
(45) Date de publication et mention de la délivrance du brevet: **26.02.2025**
(21) Numéro de dépôt: 22733694.8
(22) Date de dépôt: 30.05.2022
(51) Int. Cl.: B63H 9/061

(54) **ÉLÉMENT DE PROPULSION VÉLIQUE, VÉHICULE À PROPULSION VÉLIQUE**
SEGELANTRIEBSELEMENT, SEGELANGETRIEBENES FAHRZEUG
SAIL PROPULSION ELEMENT, SAIL-PROPELLED VEHICLE

(30) Priorité: 28.05.2021 FR 2105604
(43) Date de publication de la demande: 10.04.2024
(73) Titulaire: COMPAGNIE GENERALE DES ETABLISSEMENTS MICHELIN, 63000 Clermont-Ferrand (FR)
(72) Inventeur: ESSINGER, Olivier, 63040 CLERMONT-FERRAND Cedex 9 (FR); FRAGNIERE, Bruno, 63040 CLERMONT-FERRAND Cedex 9 (FR); KESSI, Edouard, 1162 St-Prest (CH); DE KALBERMATTEN, Laurent, 1632 RIAZ (CH)
(74) Mandataire: M.F.P. Michelin
(86) Numéro de dépôt international: PCT/FR2022/051017
(87) Numéro de publication internationale: WO 2022/248811

(56) Documents cités:
- WO-A1-90/05661
- FR-A- 1 464 877
- US-A- 5 279 241
- US-A- 5 671 690
- US-A1- 2006 118 020

## Description

L'invention concerne une voile gonflable et se situe dans le domaine de la propulsion vélique ou celui de la propulsion vélique hybride.

On rappelle ci-après quelques définitions utilisées dans ce qui suit. :
- **Prise de ris :** consiste à réduire la surface d'une voile en le repliant en partie par le bas, afin d'adapter la surface de la voile à la force du vent. La prise de ris peut se faire manuellement ou automatiquement.
- **Bandes de ris :** zones horizontales en parties renforcées permettant de fixer les renvois pour prise de ris, avec par exemple des oeillets ou des poulies. Ces bandes de ris sont disposées sur la voile au niveau de la nervure à chaque hauteur où une prise de ris est prévue. Il y a autant de bandes de ris que de possibilités de réduire la voilure.
- **Vérins paresseux (en anglais lazy jack)** : dispositif permettant de guider la voile pendant les manoeuvres de prises de ris et d'affalage de la voile.
- **Bôme** : espar horizontal, articulé proche de la base du mât, et qui permet de maintenir et d'orienter certaine voile. La bôme peut également recevoir la voile lorsque celle-ci est affalée.
- **Faseyer** : une voile qui faseye est une voile insuffisamment bordée qui se dégonfle en partie. Une voile bien réglée doit être à la limite du faseyement. Avec une voile gonflée, il n'y a pas de faseyement, ce qui permet de rester face au vent.
- **Bord d'attaque** : partie avant d'un profil aérodynamique (aile, hélice, etc) où un fluide va se séparer en deux.
- **Bord de fuite** : partie caractéristique de tout profilé (aile, quille, safran, etc) soumis à un écoulement d'un fluide (air, eau, etc) de part et d'autre. Il désigne la partie opposée au sens de la direction, ou en d'autres termes, la partie arrière considérée dans le sens de l'écoulement.
- **Têtière** : extrémité supérieure de la voile qui épouse le contour supérieur de la voile gonflable.
- **Affalage** : consiste à descendre la voile.
- **Hissage** : consiste à monter la voile.
- **Gréement** : ensemble des pièces fixes et mobiles d'un bateau, type voilier, permettant sa propulsion et ses manoeuvres par la force du vent.
- **Réceptacle de voile** : en plus de recevoir la voile affalée, il peut intégrer d'autres fonctions, telles que reprendre les efforts de tension fournis par la voile ou bien loger d'autres actionneurs, capteurs stockage d'énergie et module de commande utilisé pour opérer la voile.
- **Traînée hydrodynamique** : force de frottement entre le bateau et l'eau. Plus la traînée est élevée, plus le bateau est freiné.
- **Traînée aérodynamique** : composante de la force subie par un corps en mouvement dans un fluide qui s'exerce dans le sens opposé à la direction du mouvement. Selon l'invention, la voile génère une traînée aérodynamique.
- **Portance aérodynamique** : composante de la force subie par un corps en mouvement dans un fluide qui s'exerce perpendiculairement à la direction du mouvement. Selon l'invention, la voile génère une portance aérodynamique.
- **Vent relatif ou vent apparent** : somme vectorielle du vent créé par la vitesse propre du bateau et la vitesse réelle du vent.
- **Résultante aérodynamique** : somme vectorielle de la portance aérodynamique et de la traînée aérodynamique.

### Art antérieur

Il est déjà connu du document WO 2017/221117A1 un élément de propulsion vélique comprenant une voile gonflable à profil symétrique. Cet élément de propulsion comprend une voile gonflable constituée essentiellement de deux surfaces adjacentes, sensiblement étanches et reliées entre elles sur leur pourtour, formant ainsi au moins une cavité fermée. L'élément comprend en outre un conduit disposé entre l'intérieur et l'extérieur de la cavité et des moyens pour injecter de l'air dans la cavité. Cette voile une fois gonflée présente un profil qui reste en permanence symétrique, indépendamment du déplacement de l'élément, de la direction ou de l'intensité du vent. La voile de ce document est constamment gonflée lors de son utilisation en navigation.

Malheureusement, une telle voile souple présente l'inconvénient de ne pas présenter un gonflement adapté aux différentes étapes de son utilisation, et notamment lors des phases d'affalage et de hissage. En effet, contrairement à une voile rigide, une voile souple ne présente pas une position bien définie lors de ces étapes de manipulation (hissage et affalage). Durant ces étapes il est important de conserver la voile proche de l'axe de symétrie du profil de la voile, de manière à éviter que la voile tombe à l'eau ou s'accroche à un élément proche d'elle, ou ne s'empile pas de manière convenable pour pouvoir être rangée de manière compacte. Par ailleurs, il est important de conserver une faible pression à l'intérieur de la voile durant la phase d'affalage ou de prise de ris pour éviter qu'elle ne faseye, ce qui pourrait diminuer sa durée de vie.

Il est encore connu du document US2006174810A1 un dispositif permettant d'affaler et de hisser une voile classique d'un voilier avec une solution de guidage externe à la voile. Cette manipulation peut être effectuée facilement d'une seule main, et peut être contrôlée, dans sa descente ou son hissage, de manière continue à n'importe quelle position intermédiaire, permettant une adaptation rapide de la voile aux différentes conditions de vent.

Malheureusement un tel dispositif de gestion de la voile est disposé à l'extérieur de cette dernière, ce qui entraîne une augmentation de la traînée. Par ailleurs, un tel dispositif, étant fixé à la bôme et au mât, ne peut pas s'adapter à un mât télescopique.

Le document GB2151199A décrit une voile gonflable de bateau comprenant dans sa cavité interne un système de liaisons mécaniques flexibles, de type laçage, reliant les deux parois constituant la voile. Ce système est disposé sur toute la hauteur de la voile, et est fixé dans la partie inférieure du mât. Il a pour fonction de permettre un fonctionnement optimal de la voile d'un point de vue aérodynamique dans ces différents usages.

Malheureusement un tel système n'est pas adapté pour gérer l'affalage et le hissage répété d'une voile gonflée, et reste complexe. Le document US2006/118020 A1 divulgue un élément de propulsion vélique avec une voile gonflable, mais sans un profil en permanence symétrique et sans des moyens pour injecter de l'air dans la cavité de la voile.

Enfin il est encore connu de l'homme du métier l'utilisation de dispositifs d'un cordage externe à une voile classique, fixé sur la bôme, et destiné à sa maniabilité dans les manoeuvres d'affalage et de hissage.

Mais de tels dispositifs augmentent la traînée du voilier, par conséquent pénalisent sa vitesse, et ne sont pas adaptables sur des mâts télescopiques.

### Résumé de l'invention

Aussi il subsiste le besoin de disposer d'une voile gonflable qui, lors de l'affalage reste correctement sur son axe de symétrie le long du mât, sans faseyer, ni risque d'être endommagée, et qui puisse être déployée de manière répétée, manuellement ou automatiquement.

L'invention a pour objet un élément de propulsion vélique comprenant un mât, une voile gonflable constituée essentiellement de deux surfaces adjacentes sensiblement étanches et reliées entre elles sur leur pourtour, formant de la sorte entre elles au moins une cavité fermée, ladite voile comprenant une partie supérieure, une partie inférieure, un bord d'attaque et un bord de fuite, la voile comprenant différents galbes formant des renflements sur toute la longueur, au moins un conduit d'air disposé entre l'intérieur et l'extérieur de la cavité de la voile, au moins un moyen pour injecter de l'air dans ladite cavité, la voile une fois gonflée présentant un profil qui reste en permanence symétrique, indépendamment du déplacement dudit élément de propulsion, de la direction ou de l'intensité du vent, une têtière disposée sur la partie supérieure de la voile, un réceptacle de voile disposé entre le bord d'attaque et le bord de fuite sur la partie inférieure de la voile.

L'élément de propulsion selon l'invention se caractérise en ce qu'il comprend au moins une ligne de guidage disposée dans la cavité fermée de ladite voile, pour les manoeuvres de hissage et d'affalage de la voile, ladite ligne de guidage s'étendant du bord d'attaque au bord de fuite de ladite voile, en passant par la têtière et le réceptacle de voile.

Plus précisément, la ligne de guidage est un dispositif réalisé au travers d'un cordage permettant d'assurer en fonctionnement et durant les phases de hissage ou d'affalage le bon positionnement géométrique de la voile. La voile gonflable (ou aile) comprend plusieurs galbes (ou caissons) séparés entre eux par des nervures, une nervure étant située entre deux galbes voisins. Une nervure de la voile, par exemple considérée à la mi-hauteur de la celle-ci, est contrainte dans sa position par le fait qu'elle laisse passer le mât dans un orifice aménagé à cet effet dans la nervure, mais hormis la rigidité de la voile (qui est faible), rien ne l'empêche de tourner autour du mât sous l'effet des pressions s'exerçant sur la voile. Une telle rotation aurait pour effet un vrillage de la voile et donc une mauvaise performance. Pour éviter ce vrillage, chaque nervure est traversée par la ligne de guidage en un point suffisamment éloigné du mât. Lors de l'affalage ou du hissage, la nervure coulisse le long du mât et le long de cette ligne de guidage. Il en est de même pour toutes les nervures des galbes de la voile, elles étant toutes traversées par la ligne de guidage.

Autrement dit, l'invention propose au moins une ligne de guidage disposée dans la cavité fermée de ladite voile destinée à assister les manoeuvres de hissage et d'affalage de la voile et permettant d'assurer une bonne géométrie la voile gonflée (ou aile) dans toutes les conditions de fonctionnement de celle-ci.

Cette ligne de guidage n'a pas pour vocation de hisser la voile. Elle est d'ailleurs légèrement sous tension durant la phase de hissage et s'oppose de ce fait même à la montée de la voile. Dans le cadre de l'invention, la voile est hissée par le mât télescopique qui supporte la têtière, laquelle tire vers le haut la voile pendant que le gonflage de celle-ci se produit. Dans la variante de l'invention dans laquelle le mât n'est pas télescopique, la voile est hissée par le déplacement de la têtière le long du mât.

L'élément de propulsion selon l'invention présente les différents avantages suivants. La ligne de guidage présente dans la cavité de la voile évite de générer inutilement de la traînée supplémentaire, contrairement au gréement classique. La ligne de guidage selon l'invention permet de guider correctement la descente et la montée de la voile (on comprend sans vrillage) vers son emplacement de rangement situé sur le réceptacle de voile. La ligne de guidage selon l'invention permet d'avoir une tension peu élevée (environ 50N pour une voile d'environ 100m²) dans la voile.

Enfin, l'élément selon l'invention permet la prise de ris sans devoir arrêter le bateau. Seule la voile est face au vent contrairement au dispositif connu jusqu'ici qui nécessite que la totalité du bateau soit face au vent.

De préférence, la ligne de guidage est en une partie, et est fixée de manière fixe au réceptacle de voile sur le bord de fuite et mobile par enrouleur sur le bord d'attaque, ou bien, mobile par enrouleur au réceptacle de voile sur le bord de fuite et fixe sur le bord d'attaque et en ce que la ligne de guidage est disposée le long de la têtière de manière mobile sur au moins une poulie entre le bord de fuite et le bord d'attaque.

De préférence, la ligne de guidage est en deux parties, la première partie côté bord de fuite étant fixée ou bien mobile avec une poulie sur la têtière et mobile par enrouleur sur le réceptacle, la seconde partie côté bord d'attaque, étant fixée ou bien mobile avec une poulie sur la têtière et mobile par enrouleur sur le réceptacle.

De préférence, une poulie permet de limiter le frottement par rapport à un oeillet.

De préférence, au moins deux lignes de guidage permettent d'améliorer la précision du guidage. La présence de plusieurs lignes de guidage permet de manière préférentielle de répartir les efforts, et ainsi augmenter la précision du guidage. Les prises de ris peuvent elles aussi aider au guidage.

De préférence, la ligne de guidage a une longueur allant d'environ 2 à 150m pour une voile allant de 10 à 1000m², et de préférence d'environ 50 m pour une voile de 100m².

De préférence, la ligne de guidage présente une tension comprise entre 5 et 500N pour une voile allant de 10 à 1000m², et de préférence environ 50 à 250N pour une voile de 100m².

De préférence, la voile comprend au moins une cloison de prise de ris, et plus particulièrement de 0 à 10 cloisons de prises de ris. Les cargos peuvent n'avoir aucune prise de ris, et plus de 3 sur les grandes voiles des voiliers.

De préférence, chaque cloison de prise de ris comprend une nervure renforcée.

De préférence, le mât est fixe ou télescopique.

De préférence, la ligne de guidage est constituée en fibres de polyéthylène ultra résistante.

Un autre objet de la présente invention est un véhicule à propulsion vélique ou à propulsion hybride comprenant au moins un élément de propulsion vélique tel que cité précédemment, une coque et un mât rendu solidaire de ladite coque, mais toujours libre en rotation. Ce véhicule se caractérise en ce que le mât est disposé à l'intérieur de la cavité de voile gonflable citée ci-dessus.

Par véhicule à propulsion hybride selon l'invention, on entend la propulsion vélique couplée à une autre source de propulsion comme par exemple une propulsion par une hélice, entraînée par un moteur électrique ou à combustion, avec comme stockage d'énergie des batteries, de l'hydrogène (avec une pile à combustible), du gaz naturel, de l'ammoniaque ou du fuel.

Par véhicule, on entend les chars à voile, les chars à glace, les bateaux, les voitures.

De préférence, la voile est orientée en fonction de la direction du vent, et la direction de marche du véhicule de manière manuelle ou automatique permettant d'optimiser la poussée dans l'axe du bateau ou atteindre la poussée souhaitée tout en limitant les efforts, les pressions et la gîte à des valeurs acceptables.

### Description des dessins

L'invention va être décrite à l'aide des figures suivantes, schématiques et non nécessairement à l'échelle, et dans lesquelles :
- La figure 1 représente un rappel des différentes forces physiques qui s'appliquent sur un navire, par exemple de type voilier avec un moteur et notamment la projection de la force aérodynamique résultante ;
- La figure 2 représente une vue schématique en coupe d'un élément de propulsion vélique selon l'invention, disposé sur une coque de bateau ;
- La figure 3 représente une vue schématique en en coupe d'un élément de propulsion vélique selon une autre variante de l'invention, disposé sur une coque de bateau
- Les figures 4A, 4B et 4C représentent chacune une vue schématique de dessus de la position de l'élément de propulsion selon l'invention, en fonction de différents angles de vent relatif.

Avant d'expliquer plus en détail l'élément de propulsion vélique, objet de la présente invention, à l'aide des figures citées, un rappel de quelques définitions d'hydrodynamique et d'aérodynamique est exposé ci-après.

Un véhicule à propulsion vélique, dénommé ci-après voilier ou navire, est en contact avec l'air et avec l'eau. Sur le plan de la physique, les facteurs prépondérants sont les forces hydrodynamiques et aérodynamiques qui s'exercent sur la coque, les voiles et les appendices (dérives, quille, gouvernail, hélice).

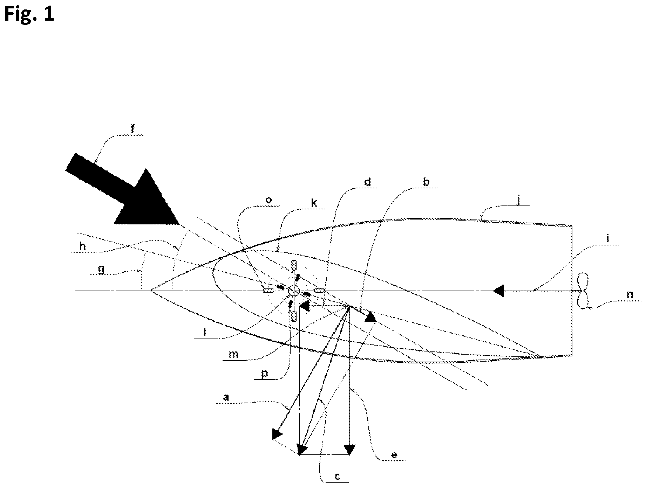

Comme le montre **la** **figure 1****,** la force **aérodynamique** (ou poussée vélique) résulte de la déviation de l'air par au moins une voile. La force aérodynamique est relative à la position et la surface de la voile et, à la position et la force du vent relatif. La force de traînée est dans la direction du vent relatif, la force de portance est dans la direction perpendiculaire du vent relatif, elle n'est pas toujours perpendiculaire à la voile. Par exemple, à 0°, un profil symétrique n'a pas de portance de par le fait que l'air parcourt strictement la même distance sur l'extrados et l'intrados. Il ne génère à ce moment que de la traînée.

La force aérodynamique générée par la voile peut aussi être décomposée dans le référentiel du bateau, et non pas dans celui de la voile, pour être composée de la force propulsive vélique (qui est dans l'axe de marche du bateau) et en une force de dérive (perpendiculaire à l'axe du bateau) qui peut induire de la gîte (inclinaison transversale d'un bateau causée par un phénomène extérieur tel que le vent).

La force **hydrodynamique** résulte du frottement de l'eau sur la coque et la dérive ou quille et les différents appendices immergés. Sa direction dépend de la force aérodynamique à laquelle elle s'oppose, de la force propulsive en mode hybride, de l'état de la mer et des courants marins. La composante longitudinale est appelée traînée hydrodynamique, et la composante transversale est appelé portance de la dérive ou force anti-dérive ou portance hydrodynamique. La direction et l'intensité de la force hydrodynamique ne dépend pas que de la force aérodynamique. Pour un bâtiment (bateau) fonctionnant en mode hybride (vent et autre énergie), la force hydrodynamique va dépendre fortement de la vitesse du bâtiment générée par la propulsion thermique ou électrique par exemple, de l'état de la mer et des courants marins.

Lorsque la force vélique est supérieure à la force hydrodynamique le bateau accélère. Lorsque la force vélique est inférieure à la force hydrodynamique le bateau ralentit. En outre, si la force aérodynamique est plus grande mais dirigée vers l'arrière du bateau ce dernier va ralentir. Si la force hydrodynamique est dans le sens de marche du bateau (en raison d'un fort courant par exemple), le bateau (voilier) va accélérer.

C'est en optimisant le réglage de la voile que le bateau (voilier) atteindra sa performance maximale en termes de poussée vélique dans le sens de la marche. En effet, c'est l'optimisation de l'angle de la voile par rapport au vent relatif et à la direction du bateau, ainsi que le réglage de la surface de la voile qui permettront au bateau d'atteindre le maximum de sa propulsion vélique dans l'axe du bateau. Il peut y avoir un paramètre de réglage supplémentaire en jouant sur la pression interne de la voile. Ceci permet ainsi d'augmenter la vitesse du bateau ou au contraire de conserver la même vitesse tout en diminuant la consommation d'autres énergies, par la faveur de la propulsion vélique.

La figure 1 reprend chacune des dénominations précédentes avec une référence qui lui est propre listées ci-après :
a : Force de portance
b : Force de trainée
c : Force résultante aérodynamique
d : Force de poussée aérodynamique (dans l'axe du navire)
e : Force de dérive aérodynamique
f : Vent relatif
g : Angle relatif aile - axe bateau (ex : 15°)
h : Angle vent relatif et axe bateau (ex : 30°)
i : Force propulsive hélice
j : Coque
k : Voile
l : Mât
m : Centre de poussée aérodynamique
n : Hélice
o : capteur sur partie fixe (référentiel coque)
p : capteur sur partie mobile (référentiel voile)

Les informations données par la figure 1 permettent de passer des capteurs de données provenant du référentiel de la coque, aux capteurs de données provenant du référentiel de la voile, et inversement.

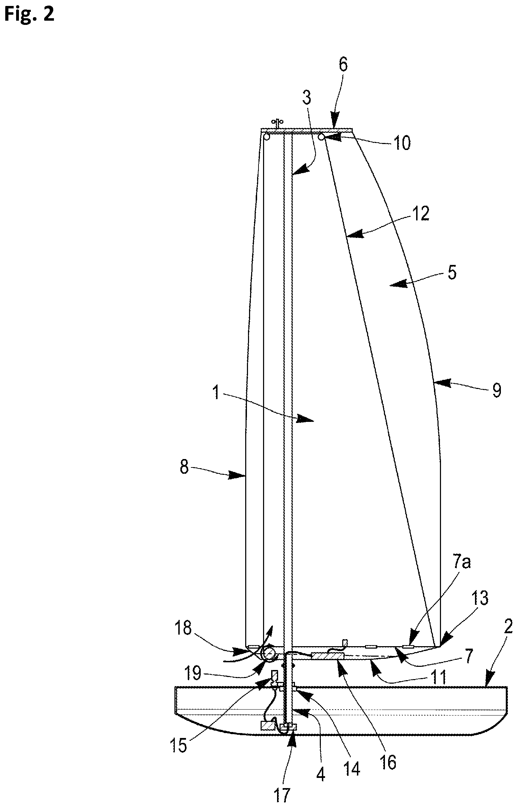

**La** **figure** 2 représente l'élément de propulsion vélique selon l'invention, monté sur un bateau, type voilier, en position de fonctionnement. Cet élément comprend une voile de référence générale 1 montée sur la coque 2 d'un bateau. L'élément comprend un mât 3 dont la base 4 est fixée à la coque 2 tout en permettant le mouvement de rotation du mât 3. Le mât 3 est autoporté. La liaison du mât 3 avec la coque 2 est effectuée à l'aide d'un support (non représenté) destiné à reprendre les efforts des forces physiques et laisser le degré de liberté en rotation. Les efforts sont mesurés au niveau du ou des support(s). La voile 1 comprend deux surfaces adjacentes 5 (une seule est visualisée sur la figure) reliées entre elles de manière à former une cavité fermée. Le matériau utilisé pour les deux surfaces adjacentes 5 doit limiter la perméation de manière à diminuer la consommation d'air, et permettre la reprise et la transmission des différents efforts en présence. Dans certains cas, il peut être nécessaire d'ajouter différents traitements au matériau de manière à garantir, par exemple, une certaine résistance aux UV, ou alors un comportement antistatique.

La voile 1 comprend plusieurs galbes (non représentés) régulièrement répartis sur la hauteur (les galbes sont plus grands en partie basse de la voile, et plus petits en partie haute). La hauteur du galbe est souvent liée à la longueur de la corde du profil. De préférence, les galbes sont séparés par des nervures qui laissent passer l'air d'un galbe à l'autre et qui présentent chacune un orifice laissant passer le mât.

Les galbes lui donnent l'aspect extérieur d'un soufflet. La voile 1 comprend une partie supérieure 6, une partie inférieure 7, un bord d'attaque 8 et un bord de fuite 9. Au moins une entrée d'air 18 est disposée, par exemple, au niveau de la partie inférieure 7 de la voile 1. D'autres entrées d'air 30 peuvent être également disposées sur la surface du bord d'attaque 8. Au moins un moyen actif pour injecter de l'air 7a au sein de la cavité de la voile est disposé dans le prolongement du conduit d'air de manière à pouvoir injecter de l'air dans la cavité de la voile. La voile comprend en outre une têtière 10 disposée sur sa partie supérieure 6, et un réceptacle 11 de voile disposé sur sa partie inférieure 7 entre le bord d'attaque 8 et le bord de fuite 9. Ce réceptacle 11 est destiné à recevoir tout ou partie de la voile lorsqu'elle est affalée. Ce réceptacle 11 peut comprendre différents actionneurs et capteurs facilitant la manoeuvre manuelle ou automatique lors du hissage ou de l'affalage de la voile 1.

L'élément de propulsion vélique selon l'invention comprend une ligne de guidage 12 disposée dans la cavité de la voile 1. Cette ligne de guidage est destinée au guidage de la voile pendant les manoeuvres de hissage et d'affalage, et de prise de ris de la voile 1. Cette ligne 12 comprend un cordage qui s'étend sensiblement sur le périmètre de la voile 1. La ligne de guidage 12 est fixée de manière amovible ou non, mais non mobile, à une extrémité 13 située proche de l'intersection du bord de fuite 9 et du réceptacle de voile 11. Elle s'étend ensuite vers la partie supérieure 6 de la voile 1, pour longer la têtière 10 entre le bord de fuite 9 et le bord d'attaque 8. La ligne de guidage 12 est mobile le long de la têtière 10 à l'aide d'au moins deux poulies ou autres systèmes de renvoi possibles (non représentées) chacune disposée de part et d'autre du mât 3. Cette ligne de guidage 12 est adjacente au bord d'attaque 8, vers le réceptacle de voile 11 pour ensuite être fixée à l'aide d'un enrouleur 19 sur le réceptacle de voile 11 sensiblement au niveau du bord d'attaque 8. La ligne de guidage 12 peut être montée vers un taquet de blocage si elle est actionnée de manière manuelle. Elle est par contre enroulée sur un enrouleur automatique pour la version automatisée.

Plus précisément, le cordage de la ligne de guidage traverse toutes les nervures séparant les différents galbes qui forment la voile gonflable. Afin d'empêcher les différentes nervures de tourner autour du mât, chaque nervure présente une fente oblongue laissant passer le cordage de la ligne de guidage du côté du bord d'attaque et une autre fente oblongue laissant passer le cordage de la ligne de guidage du côté du bord de chute. La fente oblongue permet au cordage de traverser les nervures dans toutes les positions que ces nervures prennent le long du mât lors de l'affalage et du hissage de la voile. On empêche ainsi les nervures de tourner autour du mât, malgré le fait que les nervures, ainsi que la voile sont réalisées en un matériau souple, ce qui permet à la voile de garder son profil pendant le fonctionnement et surtout pendant les manoeuvres de hissage et d'affalage de celle-ci.

A la différence d'un système de type lazy-jack de l'état de la technique, lazy-jack qui est à l'extérieur de la voile et il est fixe en permanence, le cordage de la ligne de guidage de l'invention se trouve à l'intérieur de la voile et sa longueur est ajustée pour garantir une faible tension maintenant la voile gonflable (ou aile) dans la bonne position. Ce cordage va se déplacer avec la têtière située au sommet de la voile de manière à garantir toujours une faible tension dans le cordage de la ligne de guidage.

La ligne de guidage 12 présente une longueur d'environ 50 mètres pour une voile ayant une surface totale d'environ 100m², et une tension comprise entre environ 50 et 250N selon les utilisations qui en sont faites lors des différentes manoeuvres d'affalage ou hissage.

Le mât 3 peut être télescopique ou fixe. Lorsque le mât 3 est télescopique, la têtière 10 est solidaire du dernier élément du mât 3 télescopique, pouvant conserver un degré de liberté en rotation, soit par rapport au mât, soit en ayant le dernier élément du mât télescopique qui peut tourner. Lorsque le mât 3 est télescopique, il est constitué de différents éléments qui coulissent successivement les uns les autres pour se déployer ou se rétracter. Il est aussi possible de déployer tous les éléments en même temps, si des positions intermédiaires de la voile ne sont pas nécessaires.

Lorsque le mât 3 est fixe, seule la têtière 10 est mobile le long du mât 3. La voile 1, étant fixée à la têtière 10, descend ou monte avec cette dernière.

Il est possible aussi de combiner un mât 3 télescopique et une têtière 10 qui coulisse le long du mât 3.

La têtière 10 présente une rigidité suffisante afin de communiquer les forces physiques existant entre les différents cordages et le mât 3, mais aussi pour supporter le poids de la voile lorsqu'elle n'est pas gonflée. Selon les différents modes de réalisation de l'invention, la têtière 10 peut être, au choix, en rotation libre autour du mât 3, bloquée en rotation autour du mât 3, bloquée en rotation autour du mât 3 jusqu'à une valeur limite de couple pour limiter les efforts à une valeur acceptable ou encore asservie de manière à contrôler le vrillage de la voile.

Le mât 3 est fixé à la coque 2 à l'aide d'un support de mât 14 dont le rôle est de reprendre les différentes forces physiques existant entre la voile et le bateau tout en laissant au mât 3 un degré de liberté en rotation de manière à pouvoir se positionner au bon angle par rapport au vent relatif.

A la base du mât 3, au niveau de la coque 2, existe un système 15 de réglage de l'angle d'incidence qui permet de commander la rotation de la voile 1 en faisant tourner le mât 3 et toutes les pièces de manoeuvre fixées sur ledit mât 3. Ce système 15 peut être constitué, entre autres, d'un moteur frein. Ce système 15 permet à la voile 1 de pouvoir effectuer des rotations autour de l'axe de rotation du mât 3, et par conséquent de commander l'angle d'incidence souhaité de la voile 1. Ce système de réglage de l'angle d'incidence peut aussi être monté de manière solidaire par rapport au mât 3, par exemple sur le « nest » (ou réceptacle de voile) avec un moteur frein entraînant via un pignon une couronne solidaire de la coque.

On rappelle que la mesure de l'angle d'incidence permet de connaître le positionnement angulaire de la voile 1 par rapport à l'axe du bateau. Un tel dispositif permet de mettre dans un même référentiel la voile 1, la coque 2 et le vent relatif, quel que soit l'endroit où la mesure du vent est effectuée sur la voile 1 ou sur la coque 2. Un tel système embarqué simplifie la navigation en mode automatique.

L'élément de propulsion selon l'invention disposé sur la coque d'un bateau peut en outre être combiné à un limiteur de couple, disposé à la base du mât 3, et connu pour limiter le couple maximum transmissible par la voile 1 vers la coque 2.

L'élément de propulsion selon l'invention disposé sur la coque d'un bateau peut en outre comprendre un système électronique de commande 16 disposé dans le réceptacle 11 de voile, aussi appelé « nest ». Un joint tournant électrique 17 peut également être ajouté dans la coque à la base inférieure du mât 3. Ce joint 17 permet de transmettre la puissance électrique et les commandes électriques entre la coque 2 et la partie inférieure 7 de la voile 1. Le joint 17 peut aussi être remplacé une chaîne porte câble classique adaptée. Lorsque l'énergie utilisée pour actionner l'élément vélique selon l'invention est par exemple hydraulique ou pneumatique, la même solution peut être utilisée avec un joint tournant hydraulique ou pneumatique.

Parmi les différents capteurs de mesure, on peut trouver les capteurs de mesure de l'effort transmis de la voile 1 vers la coque 2, les capteurs de mesure de l'effort dans l'axe transversal de la coque 2, les capteurs de mesure de l'effort dans l'axe longitudinale de la coque 2, le capteur de pression dans la cavité interne de la voile 1, et le capteur de mesure de la vitesse et de l'angle du vent relatif. Cette dernière mesure peut aussi bien être effectuée sur la voile 1 comme sur la coque 2. Dans le cas où les capteurs sont disposés sur la partie solidaire du mât 3, ils mesurent les efforts dans l'axe longitudinal et l'axe transversal de la voile 1.

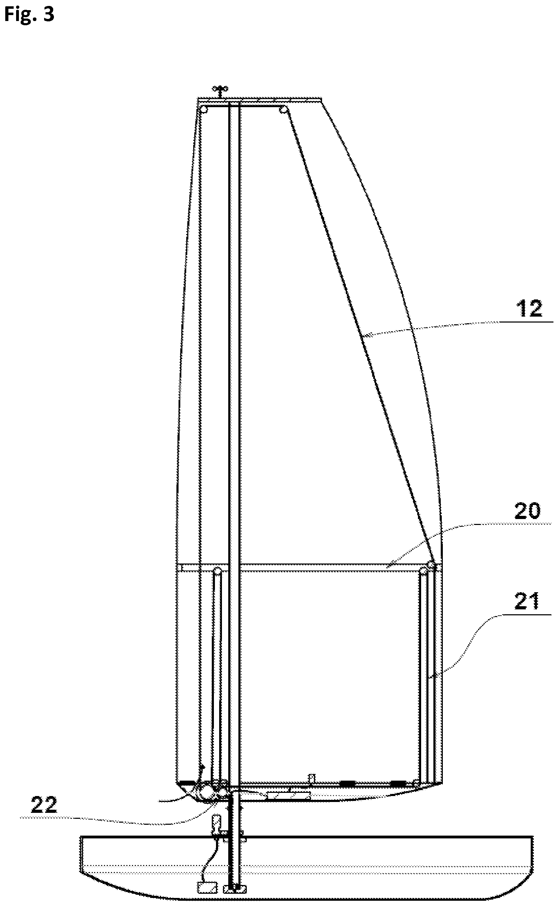

**La** **figure 3** se distingue de la figure 2 par la présence supplémentaire d'un système de bosse de ris constitué d'une cloison de prise de ris (ou raquette) 20, d'une ligne de prise de ris 21 et d'un treuil 22 de prise de ris (le treuil de ris peut être remplacé par un taquet et la force musculaire en mode manuel).

L'élément de propulsion selon l'invention peut comprendre plusieurs cloisons de prise de ris 20, par exemple jusqu'à 3. Le nombre de ces cloisons 20 est fonction du bateau, de l'usage et de l'utilisateur. Les cloisons de prise de ris 20 sont disposées au niveau de chaque bande de ris.

La ligne de prise de ris est reliée à la cloison de prise de ris 20 et permet de ramener et de compacter la voile 1 dans le réceptacle 11. La raquette présente une rigidité suffisante pour que l'effort ponctuel au niveau de la poulie, fixée sur la raquette, puisse être transmis à l'ensemble de la cloison de prise de ris 20.

A chaque prise de ris destinée à réduire la voilure à un certain niveau est associée une cloison de prise de ris 20 et une ligne de prise de ris. La ligne de prise de ris peut être réalisée soit en une seule fois avec des renvois, soit avec des lignes séparées.

Sur des voiles classiques de l'art antérieur, chaque prise de ris comprend des oeillets, des poulies rapportées, permettant de laisser passer la bosse de ris pour la prise de ris, ou des garcettes (petits cordages qui permettent d'attacher la voile repliée en passant sous la borne depuis chaque côté).

Pour la voile gonflée selon l'invention, les oeillets (ou autre point de passage) ne sont pas disposés sur la partie verticale de la voile comme dans une voile classique, mais sur la partie horizontale de la cloison de prise de ris 20, qui ne doit pas être étanche.

Par conséquent, la cloison de prises de ris 20 (ou raquette) dans l'élément de propulsion de l'invention est fixée à la paroi externe de la voile 1. Cette cloison 20 permet, en plus de la prise de ris d'approcher la ligne de guidage 12 du bord de fuite 9 et du bord d'attaque 8 surtout pour des voiles qui ne sont pas sensiblement triangulaires. De plus, la ligne de guidage 12 combinée à la cloison 20 permet d'équilibrer en partie les efforts exercés sur la têtière 6 car elle exerce simultanément une poussée vers le bas, de part et d'autre du mât 3, sur la têtière 6.

La cloison de prise de ris 20 permet, en plus de la prise de ris, d'approcher la ligne de guidage 12 du bord d'attaque 8 du bord de fuite 9, surtout pour des voiles qui ne sont pas de forme sensiblement triangulaire.

Lors de la manoeuvre de hissage de la voile, les étapes suivantes sont exécutées :
- Mettre la voile dans l'axe du vent relatif,
- Mettre une tension initiale dans la ligne de guidage et les lignes de ris,
- Gonfler la voile à une faible pression, et asservir cette pression,
- Monter la voile à une vitesse définie avec un limiteur de vitesse si la pression interne ne peut pas être maintenue,
- Après une certaine hauteur de montée, augmenter légèrement la pression dans la voile,
- Lorsqu'on atteint les ris, les libérer successivement si la surface doit être utilisée,
- Arrêt de la montée de la voile lorsque la surface de la voile est atteinte ; cette montée correspond soit à la voile totalement déployée, soit à une hauteur correspondant à une prise de ris en place,
- Monter à la pression nominale (qui dépend de la force du vent, de l'état de la mer, de l'allure souhaitée) la cavité de la voile.
Il n'est pas nécessaire d'insuffler en permanence de l'air dans la voile. En effet, il est possible d'avoir une plage de réglage de pression acceptable, permettant ainsi de n'utiliser le moyen d'insufflation d'air uniquement lorsque cela est nécessaire.

Lors de la manoeuvre d'affalage de la voile, les étapes suivantes sont exécutées :
- Mettre la voile dans le sens du vent relatif (face au vent),
- Diminuer la pression interne de la cavité
- Réguler les tensions de la ligne de guidage et des ris,
- Descendre la voile avec un limitateur de vitesse si la pression interne ne peut pas être maintenue,
- A chaque atteinte du repliage d'un ris, bloquer la bosse de ris relative,
- A 2m de la fin du repliage du mât, mettre la consigne de pression interne nulle pour faire un vide léger dans la voile afin de la compacter.

Ces différentes étapes de manoeuvres sont de préférence automatisées, d'autant plus lorsque la voile atteint une surface pouvant être de 500m² ou plus. Les manoeuvres manuelles sont facilement réalisables avec des surfaces d'environ 40m², avec les individus en nombre suffisant.

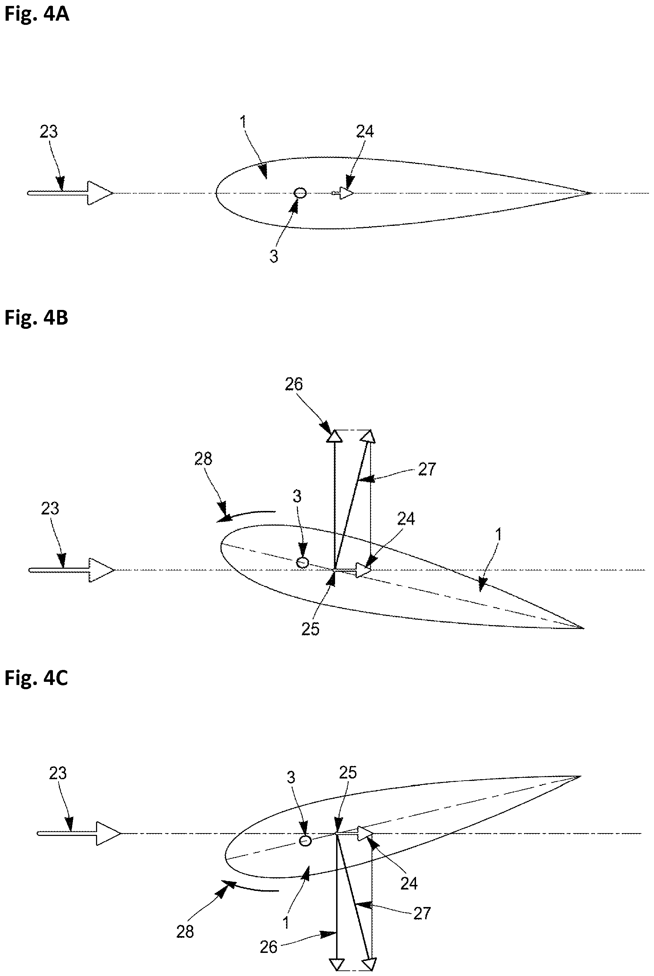

**Les** **figures 4A, 4B et 4C** se distinguent les unes des autres par un angle d'incidence de la voile différent.

Sur la figure 4A, le vent relatif est dans l'axe de la voile. Sur la figure 4B, l'axe de la voile présente un angle sensiblement égal à 15° par rapport à la direction du vent relatif, et sur la figure 4C, l'axe de la voile présente un angle symétrique et égal à celui représenté sur la figure 4B par rapport à la direction du vent relatif.

Sur les figures 4A, 4B et 4C, la voile 1 présente un profil sensiblement symétrique. Le mât 3 est symbolisé par un cercle. Le vent relatif est symbolisé par la flèche 23.

**La** **figure 4A** représente une voile 1 dans un état stabilisé, face au vent 23. Les différents efforts sont équilibrés ; la portance aérodynamique est nulle car elle est identique des deux côtés de la voile du fait de son profil symétrique. La portance aérodynamique est nulle, seule la traînée 24 existe et maintient la voile 1 selon un axe parallèle à l'axe du vent relatif.

**La** **figure 4B** représente une voile 1 dont l'axe présente un angle d'environ 15° par rapport à la direction du vent relatif. L'axe de rotation du mât 3 est décalé vers l'avant du profil par rapport au centre de poussée 25 des forces aérodynamiques le long de l'axe de symétrie du profil. La figure 4B montre que le couple généré par l'effort aérodynamique à une certaine distance du centre de rotation du mât 3 a tendance à ramener la voile vers sa position face au vent, où elle peut rester de manière stable grâce au profil symétrique de la voile.

Le décalage existant entre le point de fixation du mât 3 et le centre de poussée 25 permet à l'élément de propulsion de l'invention de garantir un maintien de la voile 1 autant dans les situations de grand écart d'angle avec la direction du vent que dans celles de petit écart. Un tel décalage entre ce point de rotation du mât 3 et le centre 25 permet d'effectuer les rappels de la voile 1 vers la position neutre de la voile, c'est-à-dire face au vent lorsqu'elle s'en écarte. Un tel décalage permet de renforcer la sécurité de la navigation puisque la voile revient d'elle-même dans une position adaptée et optimale par rapport au sens du vent relatif, ce qui minimise les efforts et maintient la voile dans une position face au vent. Cette distance doit cependant être minimisée de manière à ne pas augmenter exagérément les efforts nécessaires pour la rotation de la voile.

**La** **figure 4C** est la figure symétrique à celle de la figure 4B par rapport à l'axe du vent relatif. Les mêmes remarques que celles de la figure 4B s'appliquent.

### Exemple

L'exemple qui suit, est donné uniquement à titre d'illustration, et n'est nullement limitatif. Le tableau suivant regroupe différentes situations possibles.

| | **Voilier** | **Cargo** |
|---|---|---|
| **Longueur du bateau (mètre)** | 13 | 140 |
| **Nombre de voiles** | 1 | 4 |
| **Couche interne de la voile polyester (g/m²)** | 220 | 240 |
| **Couche externe de la voile polyester enduit** | 110 | 160 |
| **Hauteur de la voile (mètre)** | 17 | 40 |
| **Plus grande longueur de voile (mètre)** | 8 | 17 |
| **Plus grande largeur de voile (mètre)** | 1,8 | 4 |
| **Surface de la voile (m²)** | 100 | 500 |
| **Nombre de cloisons** | 30 | 35 |

La couche externe de la voile, appelée aussi carrosserie, est constituée d'un tissu comprenant une partie externe en contact avec l'air extérieur, et une partie interne. Ce tissu peut être réalisé en un tissé polyester enduit de polyuréthane. Le grammage de ce tissu peut être de 180g/m² pour une voilure d'environ 100m².

L'accrochage de la partie supérieure de la voile peut être effectuée grâce à des bandes auto agrippantes, de type Velcro. Les liaisons entre les parties extérieures de la voile et les nervures (liaisons internes), ainsi que les liaisons entre les constituants de la partie externe peuvent être effectuées par soudure ou collage ou tous autres moyens de liaison (fermeture éclair par exemple permettant de garantir, à la fois, un niveau de perméation suffisamment faible compatible avec le système de gonflage existant et aussi garantir le passage des efforts.

## Revendications

1. Elément de propulsion vélique comprenant :
a. un mât (3),
b. une voile (1) gonflable constituée essentiellement de deux surfaces adjacentes (5) sensiblement étanches et reliées entre elles sur leur pourtour, formant de la sorte entre elles au moins une cavité fermée, ladite voile comprenant une partie supérieure (6), une partie inférieure (7), un bord d'attaque (8) et un bord de fuite (9), la voile comprenant différents galbes formant des renflements sur toute la longueur,
c. au moins un conduit d'air disposé entre l'intérieur et l'extérieur de la cavité de la voile,
d. au moins un moyen pour injecter de l'air dans ladite cavité, la voile une fois gonflée présentant un profil qui reste en permanence symétrique, indépendamment du déplacement dudit élément de propulsion, de la direction ou de l'intensité du vent,
e. une têtière (10) disposée sur la partie supérieure (6) de la voile (1),
f. un réceptacle (11) de voile disposé entre le bord d'attaque (8) et le bord de fuite (9) sur la partie inférieure (7) de la voile,
**caractérisé en ce qu'il** comprend au moins une ligne de guidage (12) disposée dans la cavité fermée de ladite voile, pour les manoeuvres de hissage et d'affalage de la voile (1), ladite ligne de guidage (12) s'étendant du bord d'attaque (8) au bord de fuite (9) de ladite voile, en passant par la têtière (10) et le réceptacle (11) de voile.

2. Elément selon la revendication 1, **dans lequel** la ligne de guidage (12) est constituée en une partie, et est fixée de manière fixe au réceptacle (11) de voile sur le bord de fuite (9) et mobile par enrouleur sur le bord d'attaque (8), ou bien, mobile par enrouleur au réceptacle (11) de voile sur le bord de fuite (9) et fixe sur le bord d'attaque (8) **et en ce que** la ligne de guidage (12) est disposée le long de la têtière (10) de manière mobile sur au moins une poulie entre le bord de fuite (9) et le bord d'attaque (8).

3. Elément selon la revendication 1, **dans lequel** la ligne de guidage (12) est constituée en deux parties, la première partie côté bord de fuite (9) étant fixée ou bien mobile avec une poulie sur la têtière (10) et mobile par enrouleur sur le réceptacle (11), la seconde partie côté bord d'attaque (8) étant fixée ou bien mobile avec une poulie sur la têtière (10) et mobile par enrouleur sur le réceptacle (11).

4. Elément selon l'une des revendications précédentes, **dans lequel** une poulie limite le frottement par rapport à un oeillet.

5. Elément selon l'une des revendications précédentes, **dans lequel** au moins deux lignes de guidages permettent d'améliorer la précision du guidage.

6. Elément selon l'une des revendications précédentes, **dans lequel** la ligne de guidage à une longueur allant d'environ 2 à 150m pour une voile allant de 10 à 1000m², et de préférence d'environ 50 m pour une voile de 100m².

7. Elément selon l'une des revendications précédentes, **dans lequel** la ligne de guidage (12) présente une tension comprise entre 5 et 500N pour une voile allant de 10 à 1000m², et de préférence environ 50 à 250N pour une voile de 100m².

8. Elément selon l'une des revendications précédentes, **dans lequel** la voile comprend au moins une cloison de prise de ris.

9. Elément selon l'une des revendications 1 à 7, **dans** lequel la voile comprend de 0 à 10 cloisons de prises de ris (20).

10. Elément selon l'une des revendications 8 ou 9, **dans lequel** chaque cloison de prise de ris (20) comprend une nervure renforcée.

11. Elément selon l'une des revendications précédentes, **dans** lequel le mât (3) est fixe ou télescopique.

12. Véhicule à propulsion vélique ou à propulsion hybride comprenant au moins un élément selon l'une des revendications précédentes, une coque et un mât rendu solidaire de ladite coque mais toujours libre en rotation, **caractérisé en ce que** le mât (3) est disposé à l'intérieur de la cavité de ladite voile gonflable.

13. Véhicule selon la revendication 12, **dans lequel** la voile (1) est orientée en fonction de la direction du vent, et la direction de marche du véhicule de manière manuelle ou automatique.

## Patentansprüche

1. Segelantriebselement, welches umfasst:
a. einen Mast (3),
b. ein aufblasbares Segel (1), das im Wesentlichen aus zwei benachbarten Flächen (5) besteht, die im Wesentlichen dicht und an ihrem Umfang miteinander verbunden sind, so dass sie zwischen sich mindestens einen geschlossenen Hohlraum bilden, wobei das Segel einen oberen Teil (6), einen unteren Teil (7), eine Vorderkante (8) und eine Hinterkante (9) umfasst, wobei das Segel verschiedene Wölbungen, die Verdickungen bilden, auf der gesamten Länge umfasst,
c. mindestens einen Luftkanal, der zwischen dem Inneren und der Außenseite des Hohlraums des Segels angeordnet ist,
d. mindestens ein Mittel zum Injizieren der Luft in den Hohlraum, wobei das Segel, wenn es aufgeblasen ist, ein Profil aufweist, das stets symmetrisch bleibt, unabhängig von der Bewegung des Antriebselements, der Richtung oder der Stärke des Windes,
e. einen Segelkopf (10), der am oberen Teil (6) des Segels (1) angeordnet ist,
f. eine Segelaufnahme (11), die zwischen der Vorderkante (8) und der Hinterkante (9) am unteren Teil (7) des Segels angeordnet ist,
**dadurch gekennzeichnet, dass** es mindestens eine Führungsleine (12), die in dem geschlossenen Hohlraum des Segels angeordnet ist, für die Manöver des Setzens und des Einholens des Segels (1) umfasst, wobei sich die Führungsleine (12) von der Vorderkante (8) zur Hinterkante (9) des Segels erstreckt und dabei über den Segelkopf (10) und die Segelaufnahme (11) verläuft.

2. Element nach Anspruch 1, wobei die Führungsleine (12) aus einem Teil besteht und fest an der Segelaufnahme (11) an der Hinterkante (9) und durch einen Aufroller beweglich an der Vorderkante (8) befestigt ist, oder auch durch einen Aufroller beweglich an der Segelaufnahme (11) an der Hinterkante (9) und fest an der Vorderkante (8), und dadurch, dass die Führungsleine (12) entlang des Segelkopfs (10) beweglich an mindestens einer Seilrolle zwischen der Hinterkante (9) und der Vorderkante (8) angeordnet ist.

3. Element nach Anspruch 1, wobei die Führungsleine (12) aus zwei Teilen besteht, wobei der erste Teil auf der Seite der Hinterkante (9) am Segelkopf (10) befestigt oder auch mit einer Seilrolle beweglich ist und durch einen Aufroller an der Aufnahme (11) beweglich ist, wobei der zweite Teil auf der Seite der Vorderkante (8) am Segelkopf (10) befestigt oder auch mit einer Seilrolle beweglich ist und durch einen Aufroller an der Aufnahme (11) beweglich ist.

4. Element nach einem der vorhergehenden Ansprüche, wobei eine Seilrolle die Reibung in Bezug auf eine Öse begrenzt.

5. Element nach einem der vorhergehenden Ansprüche, wobei mindestens zwei Führungsleinen ermöglichen, die Präzision der Führung zu verbessern.

6. Element nach einem der vorhergehenden Ansprüche, wobei die Führungsleine eine Länge von ungefähr 2 bis 150 m für ein Segel von 10 bis 1000 m² und von vorzugsweise ungefähr 50 m für ein Segel von 100 m² aufweist.

7. Element nach einem der vorhergehenden Ansprüche, wobei die Führungsleine (12) eine Spannung zwischen 5 und 500 N für ein Segel von 10 bis 1000 m² und von vorzugsweise ungefähr 50 bis 250 N für ein Segel von 100 m² aufweist.

8. Element nach einem der vorhergehenden Ansprüche, wobei das Segel mindestens eine Zwischenwand zum Reffen umfasst.

9. Element nach einem der Ansprüche 1 bis 7, wobei das Segel 0 bis 10 Zwischenwände zum Reffen (20) umfasst.

10. Element nach einem der Ansprüche 8 oder 9, wobei jede Zwischenwand zum Reffen (20) eine verstärkte Rippe umfasst.

11. Element nach einem der vorhergehenden Ansprüche, wobei der Mast (3) feststehend oder teleskopisch ist.

12. Fahrzeug mit Segelantrieb oder mit Hybridantrieb, welches mindestens ein Element nach einem der vorhergehenden Ansprüche, einen Rumpf und einen mit dem Rumpf fest verbundenen, jedoch stets frei drehbaren Mast umfasst, **dadurch gekennzeichnet, dass** der Mast (3) im Inneren des Hohlraums des aufblasbaren Segels angeordnet ist.

13. Fahrzeug nach Anspruch 12, wobei das Segel (1) in Abhängigkeit von der Richtung des Windes und die Fahrtrichtung des Fahrzeugs manuell oder automatisch ausgerichtet wird.

## Claims

1. Sail propulsion element, comprising:
a. a mast (3),
b. an inflatable sail (1) consisting essentially of two substantially fluidtight adjacent surfaces (5) joined together along their periphery, thus forming at least one closed cavity between them, said sail comprising an upper part (6), a lower part (7), a leading edge (8) and a trailing edge (9), the sail comprising various cambers forming bulges along its entire length,
c. at least one air conduit positioned between the inside and the outside of the cavity of the sail,
d. at least one means for injecting air into said cavity, the sail once inflated having a profile that remains permanently symmetrical, irrespective of the movement of said propulsion element, or of the direction or strength of the wind,
e. a headboard (10) positioned on the upper part (6) of the sail (1),
f. a sail receptacle (11) positioned between the leading edge (8) and the trailing edge (9) on the lower part (7) of the sail,
**characterized in that** it comprises at least one guide line (12) positioned in the closed cavity of said sail, for the manoeuvres of hoisting and dropping the sail (1), said guide line (12) extending from the leading edge (8) to the trailing edge (9) of said sail, passing through the headboard (10) and the sail receptacle (11).

2. Element according to Claim 1, **wherein** the guide line (12) is made in one part and is attached fixedly to the sail receptacle (11) on the trailing edge (9) and able to be moved by a roller on the leading edge (8) or else is able to be moved by a roller in the sail receptacle (11) on the trailing edge (9) and fixedly attached to the leading edge (8), **and in that** the guide line (12) is positioned along the headboard (10) such as to be able to move over at least one pulley between the trailing edge (9) and the leading edge (8).

3. Element according to Claim 1, **wherein** the guide line (12) is made in two parts, the first part on the side of the trailing edge (9) being fixed or else able to be moved with a pulley on the headboard (10) and able to be moved by a roller in the receptacle (11), the second part on the side of the leading edge (8) being fixed or else able to be moved with a pulley on the headboard (10) and able to be moved by a roller in the receptacle (11).

4. Element according to one of the preceding claims, **wherein** a pulley limits friction by comparison with a grommet.

5. Element according to one of the preceding claims, **wherein** at least two guide lines make it possible to improve the precision of the guidance.

6. Element according to one of the preceding claims, **wherein** the guide line has a length ranging from around 2 to 150m for a sail ranging from 10 to 1000m², and preferably of around 50m for a 100m² sail.

7. Element according to one of the preceding claims, **wherein** the guide line (12) has a tension ranging between 5 and 500N for a sail ranging from 10 to 1000m², and preferably of around 50 to 250N for a 100m² sail.

8. Element according to one of the preceding claims, **wherein** the sail comprises at least one reefing panel.

9. Element according to one of Claims 1 to 7, **wherein** the sail comprises from 0 to 10 reefing panels (20).

10. Element according to one of Claims 8 or 9, **wherein** each reefing panel (20) comprises a reinforced rib.

11. Element according to any one of the preceding claims, **wherein** the mast (3) is fixed or telescopic.

12. Vehicle with sail propulsion or hybrid propulsion comprising at least one element according to one of the preceding claims, a hull and a mast secured to said hull but still free to rotate, **characterized in that** the mast (3) is positioned inside the cavity of said inflatable sail.

13. Vehicle according to Claim 12, **wherein** the sail (1) is oriented according to the wind direction and according to the direction of running of the vehicle either manually or automatically.
